(19) Europäisches Patentamt
European Patent Office
Office européen des brevets

(11) **EP 2 089 743 B1**

(12) **EUROPEAN PATENT SPECIFICATION**

(45) Date of publication and mention
of the grant of the patent:
**02.03.2016 Bulletin 2016/09**

(51) Int Cl.:
*G02B 5/28* *(2006.01)*     *G02B 5/20* *(2006.01)*
*F21V 9/04* *(2006.01)*     *C08J 7/04* *(2006.01)*
*B32B 17/10* *(2006.01)*    *C03C 27/12* *(2006.01)*

(21) Application number: **07857544.6**

(22) Date of filing: **13.12.2007**

(86) International application number:
**PCT/EP2007/063897**

(87) International publication number:
**WO 2008/071770 (19.06.2008 Gazette 2008/25)**

(54) **A SOLAR CONTROL FILM**

FILM ZUR KONTROLLE DER SONNENEINSTRAHLUNG

FILM DE PROTECTION SOLAIRE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.12.2006 EP 06077245**

(43) Date of publication of application:
**19.08.2009 Bulletin 2009/34**

(73) Proprietor: **Saint-Gobain Performance Plastics Chaineux S.A.**
**4650 Chaineux (BE)**

(72) Inventors:
• **DE MEYER, Christy**
**8790 Waregem (BE)**
• **MOERKERKE, Robrecht**
**8500 Kortrijk (BE)**
• **PERSOONE, Peter**
**9800 Deinze (BE)**
• **SEGERS, Anneke**
**9890 Semmerzake (BE)**

(74) Representative: **Zimmermann & Partner**
**Patentanwälte mbB**
**Postfach 330 920**
**80069 München (DE)**

(56) References cited:
**EP-A- 1 674 433        WO-A-2005/115747**
**US-A1- 2006 050 425    US-A1- 2006 154 049**

## Description

### Field of the invention.

The invention relates to a solar control film.

### Background of the invention.

Flexible solar control films are known in the art to improve the energy transmission of a transparent glazing in buildings and vehicles.
The most common function is to reduce solar heat load thereby improving comfort and reducing cooling load within a building or a vehicle.
To reduce heat load, solar transmission is blocked in either the visible or the infrared portion of the solar spectrum.
A number of different types of solar control films are known in the art. One type of solar control films known in the art comprises very thin layers of reflecting metal such as silver or aluminium deposited on a transparent substrate.
Depending upon the metal and the thickness of the metal layer, the solar control film will have a certain visible light transmission (VLT) and a certain visible light reflection (VLR).
To obtain an acceptable level of visible light reflection, the reflecting metal layer must be sufficiently thick. However, by increasing the thickness of the metal layer, the visible light transmission will decrease to a level that is not acceptable.

One attempt to increase the VLT of metallized films is by decreasing the VLR by sandwiching the metal film between layers of a material having a high refractive index as for example titanium dioxide or indium tin oxide. However, this type of solar control films requires a slow and expensive process.

An alternative type of solar control films includes an infrared light reflecting multilayer film having alternating layers of a first and a second polymer type.

However, the reflection band of this type of selective infrared reflecting films is so close to the visual that a slightly red reflection is observed.

US2006/154049 describes a multilayer film having an infrared reflecting multilayer having alternating layers of a first and a second polymer and an infrared light absorbing nanoparticles layer dispersed in a cured polymeric binder.

Other solar control films use near infrared absorbing dyes. For this purpose nanoparticles of various inorganic metal compounds can be used to form coatings that reflect or absorb in a particular wavelength band of the infrared.
However, due to the high solar heat absorption, very high glazing temperatures are reached. The high glazing temperature can lead to breakage of the glass in particular in architectural applications.

## Summary of the invention.

It is an object of the present invention to provide a solar control film avoiding the drawbacks of the prior art. It is another object of the present invention to provide a solar control film having on optimized balance between reflection and absorption of near infrared energy.

According to a first aspect of the present invention a solar control film is provided.
The solar control film is positioned relative to the sun and comprises

- at least one infrared reflecting layer comprising at least one metal;
- at least one infrared absorbing layer comprising nanoparticles.

The infrared absorbing layer is thereby located further from the sun than the infrared reflecting layer.

As the energy of the sun first hits the infrared reflecting layer, part of the energy will be reflected. The part of the energy that is transmitted will be absorbed at least partially by the infrared absorbing layer.

By combining first reflection of the infrared energy and then absorption of the infrared energy and by choosing the type of nanoparticles, an optimum between reflection and absorption is found.

The nanoparticles are chosen to have an internal transmission of the infrared absorbing layer in the near infrared range lower than 30 % and to have an internal transmission of the infrared absorbing layer in the visible range is higher than 80 %.

For the purpose of this invention "the near infrared range" is defined as the range from 780 nm to 2500 nm whereas "the visible range" is defined as the range from 380 to 780 nm.

### Infrared reflecting layer

In principle any type of infrared reflecting layer known in the art can be considered.

A first type of an infrared reflecting layer comprises at least one reflecting metal layer. Preferred metal layers comprise aluminium, silver, gold, copper, chromium and alloys thereof.

Preferred silver alloys comprise silver in combination with for example gold, platinum, palladium, copper, aluminium, indium or zinc and/or mixtures thereof.

A preferred infrared reflecting layer comprises a silver alloy comprising between 1 and 50 wt% gold, as for example between 10 wt% and 20 wt%.

An alternative infrared reflecting layer comprises a silver layer or a silver alloy layer having a metal layer such as a gold layer on one or one both sides.

The thickness of the infrared reflecting layer is preferably ranging between 5 and 25 nm as for example between 5 and 15 nm, such as 7, 8 or 9 nm.

The infrared reflecting layer is preferably deposited by a vacuum deposition technique for example by sputtering or evaporation.

In a preferred embodiment the metal layer is sandwiched between layers having a high refractive index such as metal oxides.

The metal oxide layers may comprise any transparent material. However, metal oxide having a high refractive index and an almost zero extinction coefficient are preferred.

The infrared reflecting layer may for example comprise one, two or three metal layers, each metal layer sandwiched between layers such as metal oxide layers having a high refractive index.

The metal oxide layers of the layered structure can be deposited by any technique known in the art. Preferred techniques comprise physical vapor deposition techniques such as sputter deposition or chemical vapor deposition techniques.

A preferred metal oxide layer comprises $TiO_2$ and more particularly $TiO_2$ that is mainly composed of rutile phase and that is very dense. This type of $TiO_2$ has a refractive index of 2.41 at 510 nm.

A $TiO_2$ layer can be deposited by a reactive sputter deposition process from a Ti-target, a $TiO_2$-target or a substoichiometric $TiO_x$-target (with x between 1.75 and 2).

$TiO_2$ mainly composed of rutile phase is preferably deposited by DC magnetron sputtering using a $TiO_x$ targets (preferably a rotatable $TiO_x$ target) with x between 1.5 and 2, for example between 1.5 and 1.7. These rotatable targets are produced by plasma spraying of rutile powder in a reducing atmosphere (e.g. $Ar/H_2$) on a stainless steel backing tube. The targets have enough electrical conductivity to be used as cathodes in a DC magnetron sputtering process and can withstand extremely high power levels. As a result, it is possible to achieve very high sputter deposition rates, at lower investment cost (both the deposition source itself and the power supply are considerably cheaper).

Other metal oxides having a high refractive index are for example $BiO_2$ (refractive index 2.45 at 550 nm) or PbO (refractive index 2.55 at 550 nm).

The different metal oxide layers of the reflecting layer may comprise the same material or may comprise a different material.

**Infrared absorbing layer**

According to the present invention, the infrared absorbing layer comprises nanoparticles. The term "nanoparticles" refers to infrared absorbing inorganic nanoparticles.

Depending on the infrared absorption resonance wavelength (i.e. the wavelength at which the nanoparticles primarily absorb) and the width of the absorbance range (i.e. the wavelength range over which the nanoparticles cause absorption), one can divide nanoparticles in different groups.

- a first group of nanoparticles absorb infrared energy in a broad band in the wavelength range above 1000 nm.
  Examples comprise indium oxide, tin oxide, antimony oxide, zinc oxide, aluminium zinc oxide, tungsten oxide, indium tin oxide (ITO) nanoparticles, antimony tin oxide (ATO), antimony indium oxide or combinations thereof.

- a second group of nanoparticles absorb infrared in the near infrared. The nanoparticles of the second group absorb infrared in the range 780 - 1000 nm. Examples of nanoparticles of the second group comprise hexaboride nanoparticles, tungsten oxide nanoparticles or composite tungsten oxide particles.

Tungsten oxide is expressed by the formula $W_yO_z$, whereby W is tungsten and O is oxygen and whereby 2 < z/y <3.

Composite tungsten oxide is expressed by the formula $M_xW_yO_z$, whereby M is selected from the group consisting of H, He, alkali metal, alkali-earth metals, rare-earth metals , Mg, Zr, Cr, Mn, Fe, Ru, Co, Rh, Ir, Ni, Pd, Pt, Cu, Ag, Au, Zn, Cd, Al, Ga, In, Ti, Si, Ge, Sn, Pb, Sb, B, F, P, S, Se, Br, Te, Ti, Nb, V, Mo, Ta, Re; W is tungsten and O is oxygen and whereby $0.001 \leq x/y \leq 1$ and $2 \leq z/y \leq 3$.

As hexaboride particles, particles of La, Ho, Dy, Tb, Gd, Nd, Pr, Ce, Y, Sm can be considered. The most preferred hexaboride particles comprise $LaB_6$.

Also hexaboride particles in combination with other particles as for example oxide particles can be considered.

For the present invention the second group of nanoparticles is employed.

Using nanoparticles of the second group result in a solar control film combining a remarkable absorption in the near infrared and maintaining a high transmission in the visible.

If one considers an infrared absorbing layer having a thickness ranging between 0.8 $\mu$m and 55 $\mu$m and comprising nanoparticles of the second group in a concentration ranging between 0.01 and 5 $g/m^2$, the transmission (VLT) in the visible range (380 - 780 nm) is higher than 70 % and more preferably higher than 72 % or even higher than 75 %.

The transmission in the range 800 - 1000 nm of such an infrared absorbing layer is for all wavelengths of this range below 50 %.

The above mentioned transmission in the visible range and the transmission in the range 800 -1000 nm is the transmission of an infrared absorbing layer as such, i.e. without any other layer such as an infrared reflecting layer or a substrate.

A similar infrared absorbing layer comprising nanoparticles of the first group has a lower transmission in the fivisble (380 - 780 nm) and a transmission in the range 800 -1000 nm that is higher than 50 %.

The nanoparticles have preferably a diameter ranging between 1 nm and 500 nm. More preferably, the diameter of the particles ranges between 10 and 100 nm.

The nanoparticles can have any shape.

The concentration of the nanoparticles is preferably ranging between 0.01 and 5 $g/m^2$. More preferably, the concentration of the nanoparticles is ranging between 0.8 and 3 $g/m^2$.

The nanoparticles can for example be dispersed in a polymeric binder or they can be incorporated in a substrate such as a polymer film.

The infrared reflecting layer and the infrared absorbing layer are preferably deposited on a substrate, either a flexible or rigid substrate. Any transparent material conventionally used for solar control films can be considered. Preferred substrates comprise glass or polymer films. Suitable polymers are polyethylene terephthalate (PET), polyethylene naphthalate (PEN), polyurethane (PU), polycarbonate (PC), polyimide and polyether imide.

## Brief description of the drawings.

The invention will now be described into more detail with reference to the accompanying drawings wherein

- Figure 1 is a schematic representation of a solar control film according to the present invention;
- Figure 2, 3, 4 and 5 show different embodiments of a solar control film according to the present invention.

## Description of the preferred embodiments of the invention.

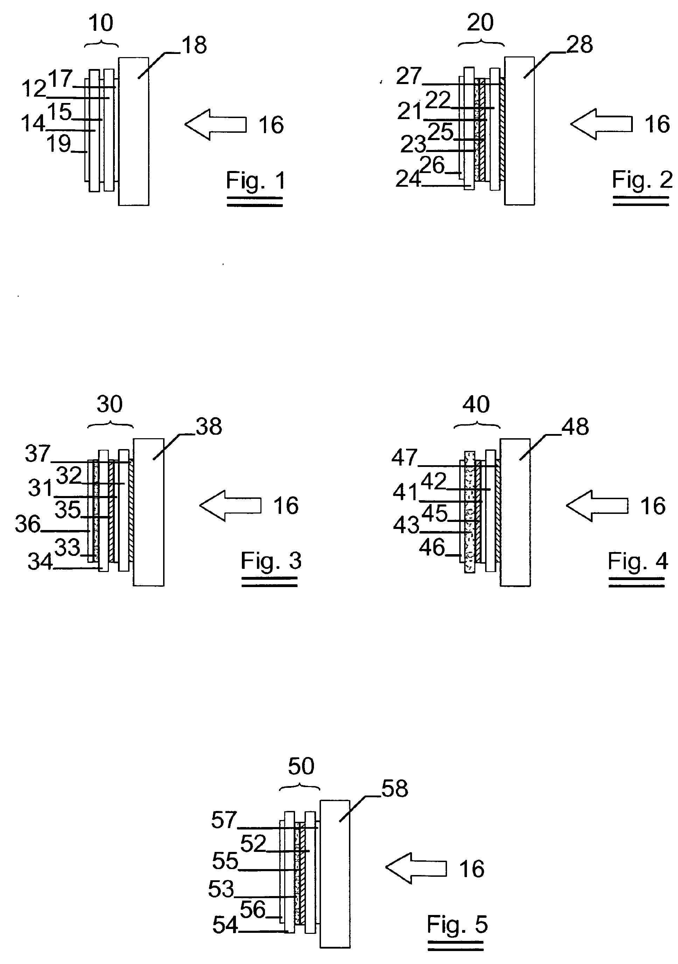

Figure 1 shows a schematic representation of a solar control film 10 according to the present invention.

The solar control film 10 comprises an infrared reflecting layer 12 and an infrared absorbing layer 14. The infrared absorbing layer 12 is located further from the sun 16 than the infrared reflecting layer 12. The infrared reflecting layer 12 and the infrared absorbing layer are laminated to each other by means of an adhesive 15.

The solar control film 10 is adhered to a glass substrate 18 by means of an adhesive 17.

Possibly, the solar control film comprises an additional layer 19 such as a hard coat layer or a scratch resistant layer.

Figure 2 shows a detailed embodiment of a solar control film 20 according to the present invention.

The solar control film 20 comprises an infrared reflecting layer 21 and an infrared absorbing layer 23.

The infrared reflecting layer 21 comprises a silver or stabilized silver layer deposited on a first PET substrate 22.

The infrared absorbing layer 23 is applied on a second PET substrate 24. The infrared absorbing layer 23 comprises nanoparticles dispersed in a cured polymeric binder.

The first PET substrate 22 provided with the infrared reflecting layer 21 and the second PET substrate 24 provided with the infrared absorbing layer 23 are laminated to each other by means of a first adhesive 25 to form the solar control film 20. The infrared absorbing layer 23 is thereby brought towards the infrared reflecting layer 21.

Possibly, the solar control film comprises an additional layer 26 such as a scratch resistant layer or a hardcoat layer. The solar control film 20 is applied to a glass substrate 28 by means of a second adhesive 27. Figure 3 shows an alternative embodiment of a solar control film 30 according to the present invention.

The solar control film 30 comprises an infrared reflecting layer 31 and an infrared absorbing layer 33.

The infrared reflecting layer comprises a silver or stabilized silver layer 31 deposited on a first PET substrate 32.

The infrared absorbing layer 33 is applied on a second PET substrate 34.

The infrared absorbing layer 33 comprises nanoparticles dispersed in a cured polymeric binder.

The first PET substrate provided with the infrared reflecting layer 31 and the second PET substrate 34 provided with the infrared absorbing layer 33 are laminated to each other by means of a first adhesive 35 to form the solar control film 30. The second PET substrate is thereby brought towards the infrared reflecting layer 31.

Possibly, the solar control film comprises an additional layer 36 such as a scratch resistant layer or a hardcoat layer. The solar control film 30 is applied to a glass substrate 38 by means of a second adhesive 37.

Figure 4 shows a further embodiment of a solar control film 40.

The solar control film 40 comprises an infrared reflecting layer 41 and an infrared absorbing layer 43.

The infrared reflecting layer 41 comprises a silver or stabilized silver layer 31 deposited on a first PET substrate 42.

The infrared absorbing layer 43 comprises nanoparticles dispersed in a PET substrate.

The first PET substrate 42 provided with the infrared reflecting layer 41 and the infrared absorbing layer (the PET substrate comprising nanoparticles) are laminated to each other by means of a first adhesive 45 to form the solar control film 40.

Possibly, the solar control film comprises an additional layer 46 such as a scratch resistant layer or a hardcoat layer. The solar control film 20 is applied to a glass substrate 48 by means of a second adhesive 47. Figure 5 shows still a further embodiment of a solar control film 50. The solar control film 50 comprises an infrared reflecting layer 52 and an infrared absorbing layer 53.

The infrared reflecting layer 52 comprises a multilayer comprising alternating layers of a first polymer and a second polymer.

The first polymer and the second polymer have different refractive indices so that some light is reflected at the interfaces between adjacent layers.

The infrared absorbing layer 53 comprises nanoparticles dispersed in a cured polymeric binder. The infrared absorbing layer is applied on a PET substrate 54.

The infrared reflecting layer 52 and the PET substrate 54 provided with the infrared absorbing layer 53 are laminated to each other by means of a first adhesive 55 to form solar control film 50.

Possibly, the solar control film comprises an additional layer 56 such as a scratch resistant layer or a hardcoat layer. The solar control film 50 is applied to a glass substrate 58 by means of a second adhesive 57.

The solar performance of a number of solar control films according to the present invention is evaluated by determining the visual light transmittance (VLT), the total solar energy rejected (TSER) and the solar heat gain coefficient (SHGC).

The visual light transmittance (VLT) refers to the percentage of the visible spectrum (380 -780 nm) that is transmitted through a window. The total solar energy rejected (TSER) describes the total amount of incident solar energy (350 - 2500 nm) that is blocked, or rejected, from passing through the window.

The solar heat gain coefficient (SHGC) is the fraction of incident solar energy (350 - 2500 nm) admitted through a window, both directly transmitted and absorbed and subsequently released inward by means of convection and radiation. SHGC is expressed as a number between 0 and 1. The lower a window's solar heat gain coefficient, the less solar heat it transmits.

The relation between SHGC and TSER is as follows :

$$TSER = (1\text{-}SHGC) * 100 \ \%$$

The different solar control films that are evaluated are described below.

Film 1 comprises a infrared reflecting silver layer deposited on a PET substrate.

Film 2 comprises a solar control film according to the present invention comprising a silver layer as infrared reflecting layer and an infrared absorbing layer comprising $LaB_6$ particles.
The concentration of the nanoparticles is 0.02 g/m$^2$. The nanoparticles have a diameter range between 20 and 200 nm with a mean diameter below 80 nm. The nanoparticles are dispersed in an UV curable acrylic binder.
The thickness of the acrylic layer comprising the nanoparticles is 2 $\mu$m.

Film 3 comprises a solar control film according to the present invention comprising a silver layer as infrared reflection layer and an infrared absorbing layer comprising cesium tungsten oxide nanoparticles.
The concentration of the nanoparticles is 0.3 g/m$^2$. The nanoparticles have a diameter ranging between 10 and 100 nm as for example 60 nm.
The nanoparticles are dispersed in an UV curable acrylic binder.
The thickness of the acrylic layer comprising the nanoparticles is 2 $\mu$m.

Film 4 comprises a solar control film according to the present invention comprising a silver layer as infrared reflection layer and an infrared absorbing layer comprising cesium tungsten oxide nanoparticles.
The concentration of the nanoparticles is 1.2 g/m$^2$. The nanoparticles have a diameter ranging between 10 and 100 nm as for example 60 nm.
The nanoparticles are dispersed in an UV curable acrylic binder.
The thickness of the acrylic layer comprising the nanoparticles is 5 $\mu$m.

The results are summarized in table 1.

Table 1

|  | VLT | TSER | SHGC |
|---|---|---|---|
| Film 1 | 72 | 34 | 0.66 |
| Film 2 | 66 | 43 | 0.57 |
| Film 3 | 69 | 44 | 0.56 |
| Film 4 | 64 | 53 | 0.47 |

Film 1 comprising an infrared refecting layer shows a high VLT but a low TSER.

By adding an infrared absorbing layer to the reflecting layer the TSER is considerably increased while the VLT is reduced only slightly.

## Claims

1. A solar control film positioned relative to the sun, said solar control film comprising

   - at least one infrared reflecting layer comprising at least one metal;
   - at least one infrared absorbing layer comprising nanoparticles, whereby said infrared absorbing layer is located further from the sun than said infrared reflecting layer;
   said nanoparticles being selected from the group consisting of hexaboride nanoparticles, tungsten oxide nanoparticles, composite tungsten oxide particles and combinations thereof;

said nanoparticles are chosen to have an internal transmission of the infrared absorbing layer in the near infrared range (ranging from 780 nm to 2500 nm) lower than 30 %, with an internal transmission in the range of 800 nm to 1000 nm being for all wavelengths of said range below 50 % and to have an internal transmission of the infrared absorbing layer in the visible range (ranging from 380 to 780 nm) is higher than 70 %.

2. A solar control film according to claim 1, whereby the internal transmission of the infrared absorbing layer in the visible range is higher than 80 %.

3. A solar control film according to claim 1 or 2, whereby the internal transmission of the infrared absorbing layer in the near infrared range (ranging from 780 nm to 2500 nm) is lower than 20 % and the internal transmission in the visible range is higher than 90 %.

4. A solar control film according to any one of the preceding claims, whereby said infrared reflecting layer comprises at least one metal selected from the group consisting of silver, gold, copper, chromium and alloys thereof.

5. A solar control film according to any one of the preceding claims, whereby said infrared reflecting layer has a thickness ranging between 5 and 25 nm.

6. A solar control according to any one of the preceding claims, whereby said infrared reflecting layer is deposited by sputtering or evaporation.

7. A solar control film according to any one of the preceding claims, whereby said infrared reflecting layer is sandwiched between layers having a high refractive index.

8. A solar control film according to any one of the preceding claims, whereby said nanoparticles have a diameter ranging between 1 and 500 nm.

9. A solar control film according to any one of the preceding claims, whereby the concentration of said nanoparticles is ranging between 0.01 and 5 $g/m^2$.

10. A solar control film according to claim any one of the preceding claims, whereby said infrared reflecting and/or said infrared absorbing layer is/are deposited on a flexible or rigid substrate.

**Patentansprüche**

1. Sonnenschutzfolie, die bezüglich der Sonne positioniert ist, wobei die Sonnenschutzfolie Folgendes umfasst:

- mindestens eine infrarotreflektierende Schicht, die mindestens ein Metall umfasst;
- mindestens eine infrarotabsorbierende Schicht, die Nanoteilchen umfasst, wobei die infrarotabsorbierende Schicht weiter von der Sonne entfernt angeordnet ist als die infrarotreflektierende Schicht;
wobei die Nanoteilchen aus der Gruppe bestehend aus Hexaborid-Nanoteilchen, Wolframoxid-Nanoteilchen, Verbund-Wolframoxid-Nanoteilchen und Kombinationen davon ausgewählt sind;
wobei die Nanoteilchen derart ausgewählt sind, dass eine interne Übertragung der infrarotabsorbierenden Schicht im Nah-Infrarot-Bereich (der von 780 nm bis 2500 nm reicht) von weniger als 30 % erzielt wird, wobei eine interne Übertragung im Bereich von 800 nm bis 1000 nm für alle Wellenlängen des Bereichs weniger als 50 % beträgt, und dass eine interne Übertragung der infrarotabsorbierenden Schicht im sichtbaren Bereich (der von 380 bis 780 nm reicht) von mehr als 70 % erzielt wird.

2. Sonnenschutzfolie nach Anspruch 1, wobei die interne Übertragung der infrarotabsorbierenden Schicht im sichtbaren Bereich mehr als 80 % beträgt.

3. Sonnenschutzfolie nach Anspruch 1 oder 2, wobei die interne Übertragung der infrarotabsorbierenden Schicht im Nah-Infrarot-Bereich (der von 780 nm bis 2500 nm reicht) weniger als 20 % beträgt und die interne Übertragung im sichtbaren Bereich mehr als 90 % beträgt.

4. Sonnenschutzfolie nach einem der vorhergehenden Ansprüche, wobei die infrarotreflektierende Schicht mindestens ein Metall umfasst, das aus der Gruppe bestehend aus Silber, Gold, Kupfer, Chrom und Legierungen davon ausgewählt ist.

5. Sonnenschutzfolie nach einem der vorhergehenden Ansprüche, wobei die infrarotreflektierende Schicht eine Dicke aufweist, die zwischen 5 und 25 nm liegt.

6. Sonnenschutzfolie nach einem der vorhergehenden Ansprüche, wobei die infrarotreflektierende Schicht durch Sputtern oder Verdampfung abgeschieden wird.

7. Sonnenschutzfolie nach einem der vorhergehenden Ansprüche, wobei die infrarotreflektierende Schicht zwischen Schichten mit einem hohen Brechungsindex eingeschoben ist.

8. Sonnenschutzfolie nach einem der vorhergehenden Ansprüche, wobei die Nanoteilchen einen Durchmesser aufweisen, der zwischen 1 und 500 nm liegt.

9. Sonnenschutzfolie nach einem der vorhergehenden Ansprüche, wobei die Konzentration der Nanoteilchen zwischen 0,01 und 5 g/m² liegt.

10. Sonnenschutzfolie nach einem der vorhergehenden Ansprüche, wobei die infrarotreflektierende Schicht und/oder die infrarotabsorbierende Schicht auf einem flexiblen oder steifen Substrat abgeschieden wird bzw. werden.

**Revendications**

1. Film de protection solaire positionné par rapport au soleil, ledit film de protection solaire comprenant

    - au moins une couche de réflexion des infrarouges contenant au moins un métal ;
    - au moins une couche d'absorption des infrarouges contenant des nanoparticules, ladite couche d'absorption des infrarouges étant située plus loin du soleil que ladite couche de réflexion des infrarouges ;

    lesdites nanoparticules étant choisies dans le groupe comportant des nanoparticules d'hexaborure, des nanoparticules d'oxyde de tungstène, des particules d'oxyde de tungstène composites et leurs combinaisons ;
    lesdites nanoparticules étant choisies pour avoir une transmission interne de la couche d'absorption des infrarouges dans la spectre des infrarouges proches (de 780 nm à 2500 nm) inférieure à 30%, une transmission interne dans la gamme de 800 nm à 1000 nm étant inférieure à 50% pour toutes les longueurs d'onde de ledit spectre et pour avoir une transmission interne de la couche d'absorption des infrarouges dans la spectre visible (de 380 à 780 nm) supérieure à 70%.

2. Film de protection solaire selon la revendication 1, dans lequel la transmission interne de la couche d'absorption des infrarouges dans le spectre visible est supérieure à 80%.

3. Film de protection solaire selon la revendication 1 ou 2, dans lequel la transmission interne de la couche d'absorption des infrarouges dans le spectre des infrarouges proches (de 780 nm à 2500 nm) est inférieure à 20% et la transmission interne dans le spectre visible est supérieure à 90%.

4. Film de protection solaire selon l'une quelconque des revendications précédentes, dans lequel ladite couche de réflexion des infrarouges contient au moins un métal choisi dans le groupe comportant l'argent, l'or, le cuivre, le chrome et leurs alliages.

5. Film de protection solaire selon l'une quelconque des revendications précédentes, dans lequel ladite couche de réflexion des infrarouges a une épaisseur comprise entre 5 et 25 nm.

6. Film de protection solaire selon l'une quelconque des revendications précédentes, dans lequel ladite couche de réflexion des infrarouges est déposée par pulvérisation ou évaporation.

7. Film de protection solaire selon l'une quelconque des revendications précédentes, dans lequel ladite couche de réflexion des infrarouges est prise en sandwich entre des couches ayant un indice de réfraction élevé.

8. Film de protection solaire selon l'une quelconque des revendications précédentes, dans lequel lesdites nanoparticules ont un diamètre compris entre 1 et 500 nm.

9. Film de protection solaire selon l'une quelconque des revendications précédentes, dans lequel la concentration desdites nanoparticules est comprise entre 0,01 et 5 g/m².

10. Film de protection solaire selon l'une quelconque des revendications précédentes, dans lequel ladite couche de réflexion des infrarouges et/ou ladite couche d'absorption des infrarouges sont déposées sur un substrat souple ou rigide.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006154049 A